# EUROPEAN PATENT APPLICATION

(11) **EP 0 823 390 A1**
(43) Date of publication of application: **11.02.1998**
(21) Application number: 97300466.6
(22) Date of filing: 24.01.1997
(51) Int. Cl.: B65G 23/06

(54) **Extruded sprocket for use with modular belt conveyor**

(30) Priority: 30.07.1996 US 688503
(71) Applicant: REXNORD CORPORATION, Milwaukee, WI 53214 (US)
(72) Inventor: Stebnicki, James C., Whitefish Bay, Wisconsin 53217 (US); Corlett, Rick O., Cedarburg, Wisconsin 53012 (US)
(74) Representative: Allman, Peter John

(57) **Abstract**

A sprocket formed by extrusion so as to have a drive surface extending along the entire length of a conveyor chain drive is disclosed. The sprocket is configured to be used in a single unit wherein the sprocket is made from a selected extrudable material such as ultra high molecular weight polyethylene. The sprocket is further configured to have optional endcaps used so as to provide stop means for preventing lateral movement of a conveyor chain across the sprocket.

The drive surface of the sprocket can be configured to custom fit a selected conveyor chain and the configuration remains substantially unchanged throughout the useable life of the sprocket. The extruded sprocket thus obviates the need for adjustment or refitting of the sprocket to the conveyor chain during use. The extrusion die determines the configuration of the drive surface or teeth of the sprocket.

## Description

### FIELD OF THE INVENTION

The present invention is related to drive mechanisms for conveyors and more particularly to sprocket drives for modular belts.

### BACKGROUND OF THE INVENTION

The present invention presents a significant improvement over conventional drive sprockets used for driving conveyor chain or modular belting in the food processing and related industries. In the past, sprocket drives have been commonly comprised of a number of sprockets spaced apart along the length of a drive shaft. See for example, Arinaga, U.S. Patent No. 4,571,224.

Conveyor chain or modular belting is commonly supported by a conveyor frame, and sprockets are commonly used to drive the chain and products supported on the chain. Prior art sprocket assemblies consisting of multiple parts present multiple surfaces for bacterial growth and contamination entrapment. This is a problem in the food services industry and beverage industry where ease of cleanability is a desired quality in any conveyor system component.

The present invention is devised so as to operate cooperatively with either modular belting or conveyor chains. Modular belting may be configured as in U.S. Patent No. 5,096,053 to Hodlewsky, or U.S. Patent No. 5,125,504 to Corlett, et al.

The prior art sprockets also provide limited area of interaction with the drive surfaces of the chain or modular belting, and conventional sprockets do not provide a drive surface that extends across the width of the conveyor chain.

In Arinaga, U.S. Patent No. 4,571,224, a plurality of sprockets are spaced along the length of a shaft to drive a chain. A disadvantage of this system is that with a plurality of sprockets, there are multiple opportunities for contamination to exist within the conveyor drive assembly. Additionally, during assembly of the Arinaga drive system, the sprockets must be individually aligned to ensure the alignment of each and every sprocket with the driven chain and other sprockets. During assembly and maintenance and in the event of breakdown, realignment and adjustment may be time consuming.

Ledet, et al. U.S. Patent No. 5,170,883 discloses a sprocket arrangement for driving a conveyor belt wherein a metal sprocket is used with a modular plastic belt. The sprocket drive assembly in Ledet et al. is formed by aligning a multiplicity of sprocket elements across the width of the belt.

Furthermore, the use of a multiplicity of sprockets can present a problem of different coefficients of expansion when the conveyor system is used in extreme cold or in extreme heat or is run on an indoor/outdoor system. This may require additional adjustment to the sprockets in the Ledet et al. type construction and potential down time for adjustment in situations of temporary changes in operating conditions such as in substantially outdoor ambient temperatures of certain warehousing operations. Additionally, the Ledet et al. construction again presents a multiplicity of opportunities for contamination and difficult cleanup in operations, particularly for the food service and meat packing industries.

Another disadvantage of some prior art systems employing multiple sprockets spaced across the width of the conveyor is that there may be unequal loading of the multiple sprockets, and the sprockets may provide unequal driving force to the modular belting. Unequal loading leads to pin wear in modular belting due to uneven bearing faces.

### SUMMARY OF THE INVENTION

A conveyor belt system is disclosed including a conveyor chain system having a plurality of modular links cooperatively engage and an extruded sprocket having driving surfaces configured to engage mating drive surfaces of the conveyor chain. The extruded sprocket is constructed as a single integral unit.

The extruded sprocket of the invention can be easily installed and avoids tedious alignment of multiple sprockets with a conveyor chain. The present invention provides for simple alignment of the sprocket teeth relative to the chain.

The sprocket embodying the invention is formed by extruding polymeric material through a die having a cross-sectional configuration of the desired sprocket. The extruded material can then be cut to the desired length. The invention provides for ease of manufacture of the sprockets and permits the formation of sprockets which may be cut to any desired length. The materials that are used to comprise the extruded sprocket also can be made resistant to chemical attack, or can be made from polymer materials or plastics that are resistant to the adhesion of bacteria or other contaminants or polymer materials that have antimicrobial properties.

The extruded sprocket embodying the invention is more easily cleaned than prior art sprockets. The extruded sprocket provides less opportunity for food particles and debris to build up in the bore of the sprocket or along the edges of the sprocket surfaces. The extruded sprocket further provides a uniform drive surface extending across the width of the conveyor. The length of the sprocket of this invention can be approximately the same as the width of the chain and conveyor to maximize conveyor belt or conveyor chain life and sprocket life.

In one embodiment of the invention the extruded sprocket can be turned or machined so as to remove the sprocket teeth from spaced portions of the extruded sprocket along the length of the sprocket. The machined extruded sprocket will then include a plurality of drive sprockets integrally joined to one another by a common base or cylindrical body.

The sprocket embodying the invention can also be provided with end caps configured to prevent lateral movement of the conveyor chain with respect to the sprocket and to seal the interface between the drive shaft and the sprocket ends. These end caps can prevent debris build up in the sprocket end areas and add to the ease of cleanability of the conveyor.

In a conveyor system set up with multiple sprockets such as disclosed in Ledet et al. or Arinaga *supra,* each individual sprocket provides a concentrated load area. The extruded sprocket embodying the invention provides a larger load area by spreading the load across the length of the sprocket drive surface. The extruded sprocket of the invention thus provides for equal loading of the driving force from the sprocket to the chain across the width of the chain or modular belting.

An advantage of the present invention is that the elongated sprocket provides ease of assembly and maintenance and may be more cost effective than prior sprocket configurations. In addition, multiple materials are available for use in the construction of the sprocket in accordance with this invention. This provides the conveyor system design with the option of a sprocket made of materials that have similar coefficients of expansion and reactivity to the conveyor belt or conveyor chain.

Available materials for formation of the extruded sprocket include, but are not limited to, ultra high molecular weight polyethylene, polyethylene, polyester, aluminum or other extrudable metal, or other suitable plastic. The materials requirements for the extruded sprocket include the ability of the material to be extruded and the durability of the material when incorporated into a conveyor drive system.

The sprocket of this invention when formed from ultra high molecular weight polyethylene also provides for uniform expansion and contraction of the sprocket in response to temperature changes, such as are encountered in conveyor systems where ambient temperature may change. When the extruded sprocket is formed from a material with a similar coefficient of thermal expansion to that used in the conveyor chain, precision mating of the sprocket drive surfaces and conveyor chain drive surfaces is maintained despite changes in temperature.

### BRIEF DESCRIPTION OF THE DRAWINGS

FIG. 1 is a partial perspective view of a conveyor assembly embodying the invention and with portions of the conveyor broken away for clarity.

FIG. 2 is an enlarged end view of the extruded sprocket shown in FIG. 1.

FIG. 3 is a view similar to FIG. 2 and showing an extruded sprocket comprising an alternative embodiment.

FIG. 4 is a cross-sectional view of an alternative embodiment of the invention.

FIG. 5 is a view similar to FIGS. 2 and 3 and showing another alternative embodiment of an extruded sprocket embodying the invention.

FIG. 6 is a view similar to FIG. 1 and showing an assembled sprocket and shaft.

### DETAILED DESCRIPTION OF THE PREFERRED EMBODIMENT

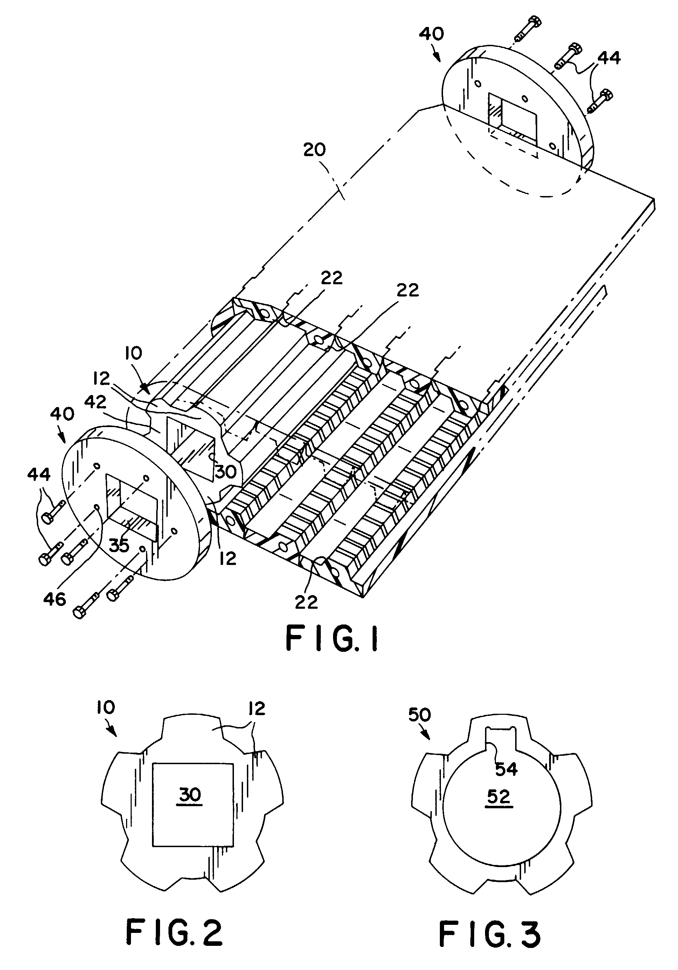

The present invention includes a conveyor having an extruded drive sprocket 10 for use in cooperation with a conveyor chain or modular conveyor belting 20. The illustrated modular conveyor belting 20 shown in Fig. 1 is of the type commonly used in a variety of industries, including meat packing and other food industries and in the beverage industry where cleanability of the conveyor system is important.

Conveyors embodying the invention can be up to 10 feet across, or more. The elongated extruded sprocket 10 is configured for use in cooperation with the modular belting, and it may be configured to extend across the entire width of the conveyor. Alternatively, the sprocket assembly may be comprised of separated segments cut to a selected length and spaced apart along a drive shaft of a conveyor.

In a preferred embodiment, the sprocket 10 can be continuous and extend along the length of the drive shaft. Fastening means also provide for fixing the sprocket on the drive shaft. For example, the sprocket may be attached to the drive shaft by means of a key and keyway, a locking collar, a set screw or other fastening means.

In the event a round shaft is used, the sprocket can be slidably mounted on the shaft, and a key can be press fit into a longitudinally extending groove in the surface of the shaft such that the key drives the sprocket.

An alternative embodiment provides for the use of end caps 40 or other end enclosures, which further seal the shaft and sprocket from contamination. In other alternative arrangements, O-rings, set collars, sealing putty or caulk can be used to provide a seal between the ends of the extruded sprocket and the shaft supporting the sprocket.

Figs. 1-3 are presented for illustration of a preferred embodiment. They are not to be taken as limiting in any sense, as modifications and adjustments to the invention may be made without departure from that disclosed herein and as set forth in the claims.

In Fig. 1 there is shown a perspective view of the extruded sprocket 10 driving a conveyor chain or modular conveyor belt 20. The extruded sprocket 10 includes a plurality of elongated sprocket teeth 12 extending along its length and engaging opposed drive surfaces 22 of the conveyor chain 20. The sprocket 10 can be manufactured by an extrusion process wherein a selected suitable polymer material is extruded through a die, the die having a configuration to produce a cross-sectional configuration as shown in Fig. 2. The extruded length of material can then be cut to the desired length of the sprocket 10. The polymer material used to form the sprocket can be any material which can be extruded and which will have the desired characteristics of the formed sprockets. Suitable materials can be ultra high molecular weight polyethylene, polyethylene, polyester, aluminum or other extrudable metal. The extruded material can be selected based on its properties including resistance to chemical attacks, resilience, wear resistance, thermal expansion, cleanability and anti-microbial properties.

The elongated sprocket teeth 12 engage the driven chain surfaces 22 across the width of the conveyor and accordingly provide for distribution of the driving load across the width of the modular conveyor belt 20. This prevents concentration of forces and is an improvement over conventional sprocket arrangements. The distribution of load allows the entire length of the sprocket 10 to function as a drive surface and can reduce wear that commonly occurs if there is an uneven concentration of force in a given area resulting from improper alignment of the sprocket drive surfaces relative to the conveyor chain drive surfaces.

In the illustrated arrangement, end caps 40 are also provided to seal the ends 42 of the sprocket 10. The end caps 40 are designed to cooperatively fit over the end portions 42 of the sprocket 10. Each end cap 40 further includes a bore 35 designed to cooperatively fit over the drive shaft supporting the shaft. The end caps 40 can be fixed to the end of the sprocket 10 by screws or other fasteners 44 extending through holes 46. The end caps 40 can function to prevent contaminants from entering the area between the sprocket 10 and the shaft and also maintain the lateral position of the modular belting 20 on the sprocket.

In the construction shown in Figs. 1 and 2, the extruded sprocket 10 includes a square bore 30 and the extruded sprocket is intended to be supported on a drive shaft (not shown) having a complementary cross sectional configuration.

Fig. 3 illustrates an alternative embodiment of an extruded sprocket 50 of the invention and including a circular bore 52 provided with a keyway 54. In operation, the bore 52 is configured to allow for a tight and cooperative fit with a cylindrical drive shaft. A key is inserted into the keyway 54 to provide a mechanical driving connection between the drive shaft and the extruded sprocket 50.

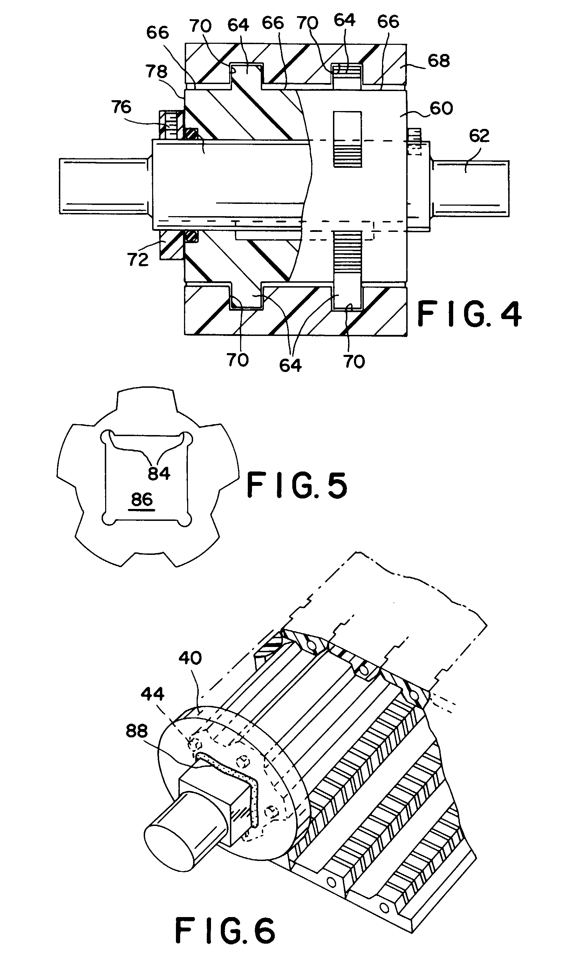

Fig. 4 illustrates in cross-section an alternative embodiment of the invention and includes an extruded sprocket 60 support on a shaft 62 such that the sprocket is driven by the shaft. The sprocket 60 includes a pair of spaced apart areas of sprocket teeth 64 separated by machined areas 66 where the sprocket teeth have been removed in a machining operation. The sprocket teeth cooperate with drive pockets formed in underside of the driven modular belting to drive the modular belting. While in the illustrated arrangement the sprocket 60 includes two areas of sprocket teeth 64, in other arrangements the extruded sprocket could be of any length and have a large number of areas of sprocket teeth depending on the width of the conveyor and modular belting 68 and the number of drive surfaces or drive pockets 70 in the modular belting.

In the illustrated arrangement of Fig. 4, a set collar 72 is fixed to the shaft by a set screw 76 and positioned against the end 78 of the drive sprocket 60 to secure the drive sprocket in position on the shaft 62. The interfaces between the opposite ends of the drive sprocket 78 and the shaft 62 are sealed by O-rings 80 housed in recesses formed in the ends of the extruded sprocket and pressed against the shaft 62.

Fig. 5 illustrates another alternative embodiment of an extruded sprocket in accordance with the invention as wherein stress relief cavities 84 are formed in the corners of the square bore 86 provided in the sprocket.

Fig. 6 shows an embodiment similar to Fig. 1 on wherein sealant or caulk 88 is used to form a seal between the end caps and the drive shaft.

## Claims

1. A conveyor for transporting articles; the conveyor comprising
a frame;
a sprocket drive shaft supported by the frame;
a conveyor chain including a plurality of modular chain links;
a sprocket supported by the sprocket drive shaft for driving the conveyor chain, the sprocket including conveyor chain drive surfaces configured to engage the conveyor chain to drive the conveyor chain, and the sprocket being an extruded single body.

2. A conveyor as set forth in claim 1 wherein the conveyor chain has a width and the sprocket has a length which is substantially the same as the width of the conveyor chain.

3. A conveyor as set forth in claim 1 wherein the sprocket is extruded from a material selected from the group 3 of: ultra high molecular weight polyethylene, polyethylene, polyester and aluminum.

4. A conveyor for transporting articles; the conveyor comprising
a frame;
a sprocket drive shaft supported by the frame;
a conveyor chain including a plurality of modular chain links;
a single sprocket supported by the sprocket drive shaft for driving the conveyor chain, the sprocket including conveyor chain drive surfaces configured to engage the conveyor chain to drive the conveyor chain, and the sprocket being an extruded single body and having a length which is a substantially the same as the width of the conveyor chain.

5. A conveyor as set forth in claim 4 wherein the sprocket is extruded from a material select from the group 3 of: ultra high molecular weight polyethylene, polyethylene, polyester and aluminum.
